# EUROPÄISCHE PATENTSCHRIFT

(11) **EP 2 961 561 B1**
(45) Veröffentlichungstag und Bekanntmachung des Hinweises auf die Patenterteilung: **31.08.2016**
(21) Anmeldenummer: 14705175.9
(22) Anmeldetag: 18.02.2014
(51) Int. Cl.: B23K 26/08, B23K 26/38

(54) **VERFAHREN ZUM SCHNEIDEN EINER BLECHPLATINE MIT EINER VORGEGEBENEN KONTUR**
METHOD OF BLANKING MATERIAL ALONG A PREDETERMINED CONTOUR
MÉTHODE DE DÉCOUPE DE TÔLE SELON UN CONTOUR PRÉDÉTERMINÉ

(30) Priorität: 28.02.2013 DE 102013203385
(43) Veröffentlichungstag der Anmeldung: 06.01.2016
(73) Patentinhaber: Schuler Automation GmbH & Co. KG, 91093 Hessdorf (DE)
(72) Erfinder: ERLWEIN, Heinz, 91358 Kunreuth (DE)
(74) Vertreter: Dr. Gassner & Partner mbB
(86) Internationale Anmeldenummer: PCT/EP2014/053141
(87) Internationale Veröffentlichungsnummer: WO 2014/131659

(56) Entgegenhaltungen:
- US-A1- 2002 053 271
- US-A1- 2010 181 165

## Beschreibung

Die Erfindung betrifft ein Verfahren zum Schneiden einer Blechplatine mit einer vorgegebenen Kontur aus einem kontinuierlich in einer Transportrichtung geförderten Blechband.

Ein derartiges Verfahren ist beispielsweise aus der WO 2009/105608 A1 oder der US-A-2010/181165 bekannt. Bei dem bekannten Verfahren ist eine Laserschneidvorrichtung mit mehreren Laserschneidköpfen vorgesehen, welche jeweils in Transportrichtung als auch in einer senkrecht dazu verlaufenden y-Richtung mittels einer Steuereinrichtung so bewegbar sind, dass damit Blechplatinen einer vorgegebenen Kontur aus dem Blechband geschnitten werden können. Bei dem bekannten Verfahren wird das Blechband auf einem Transportband in Transportrichtung geführt. Es wird zusätzlich durch ein erstes Andruckwalzenpaar am Beginn des Transportbands und ein zweites Andruckwalzenpaar am Ende des Transportbands geführt. Die Bewegung der Andruckwalzenpaare ist derart, dass das Blechband auf dem Transportband gespannt gehalten wird. Zur Erzeugung der Spannung ist es erforderlich, dass das am Ende des Transportbands vorgesehene zweite Andruckwalzenpaar mit einer höheren Geschwindigkeit angetrieben wird, als das Transportband oder das am Anfang des Transportbands vorgesehene erste Andruckwalzenpaar. - Bei dem bekannten Verfahren kann es zu unerwünschten Geschwindigkeitsfluktuationen beim Transport des Blechbands in Transportrichtung kommen. Solche Geschwindigkeitsfluktuationen können insbesondere durch Variationen in der Banddicke oder durch die Oberflächenbeschaffenheit des Blechbands und damit einhergehenden unvorhersehbaren Abrissen einer reibschlüssigen Verbindung zwischen den Andruckwalzen und/oder dem Transportband bedingt sein. Infolgedessen kann es zu unerwünschten Abweichungen bei der Herstellung des Konturschnitts kommen. Die nach dem bekannten Verfahren hergestellten Blechplatinen weisen nicht immer die vorgegebene Kontur auf. Fehlerhafte Blechplatinen müssen nachbearbeitet oder entsorgt werden.

Aufgabe der Erfindung ist es, die Nachteile nach dem Stand der Technik zu beseitigen. Es soll insbesondere ein möglichst einfaches und kostengünstiges Verfahren angegeben werden, mit dem mit verbesserter Genauigkeit Blechplatinen einer vorgegebenen Kontur aus einem kontinuierlich in einer Transportrichtung geförderten Blechband hergestellt werden können.

Diese Aufgabe wird durch die Merkmale des Anspruchs 1 gelöst. Zweckmäßige Ausgestaltungen der Erfindung ergeben sich aus den Merkmalen der Ansprüche 2 bis 8.

Das erfindungsgemäß vorgeschlagene Verfahren ist überraschend einfach und ermöglicht die Herstellung von Blechplatinen einer vorgegebenen Kontur mit einer verbesserten Genauigkeit. In Abkehr vom Stand der Technik können bei einer Vorrichtung zur Durchführung des erfindungsgemäßen Verfahrens die Andruckwalzenpaare am Anfang und im Endbereich des Transportbands weggelassen werden. Das vorgeschlagene Verfahren ist überdies unempfindlich im Hinblick auf innerhalb des Blechbands auftretende Qualitätsschwankungen, insbesondere Variationen in der Oberflächenbeschaffenheit und/oder Dicke des Blechbands.

Bei den Wegmesswerten handelt es sich vorteilhafterweise um Wegabschnitte Δx, welche das Blechband innerhalb eines vorgegebene Takts Δt zurücklegt. Die Wegmesswerte werden mit einer zum vorgegebenen Takt Δt korrespondierenden Taktrate erfasst und zur Verarbeitung an das Steuerprogramm übermittelt. Die Taktrate beträgt zumindest 100 Hz, vorzugsweise mindestens 500 Hz, besonders bevorzugt zumindest 1 kHz.

Im Sinne der vorliegenden Erfindung wird der Schneidweg "fortlaufend berechnet". D. h. es werden gemäß einer vorgegebenen Taktrate fortlaufend den Schneidweg definierende Ortskoordinaten berechnet. Die Berechnung erfolgt während der Bewegung des Laserschneidkopfs. Damit können besonders schnell und zuverlässig etwaige Geschwindigkeitsfluktuationen beim Transport des Blechbands kompensiert werden. Die Bewegung des Laserschneidkopfs erfolgt entlang des Schneidwegs beschleunigt, verzögert oder mit konstanter Geschwindigkeit. Es kann auch sein, dass der Laserschneidkopf zeitweise nicht bewegt wird.

Indem erfindungsgemäß unmittelbar am Blechband dessen zurückgelegter Weg fortlaufend gemessen und auf der Grundlage der Wegmesswerte die Bewegungen des zumindest einen Laserschneidkopfs fortlaufend berechnet werden, können Geschwindigkeitsfluktuationen sofort erkannt und dadurch bedingte Ungenauigkeiten bei der Herstellung des Konturschnitts sicher und zuverlässig vermieden werden.

Nach einer vorteilhaften Ausgestaltung wird das fortlaufende Berechnen des Schneidwegs in Echtzeit durchgeführt. Zu diesem Zweck läuft das Steuerprogramm auf einem Prozessrechner mit einem Echtzeitbetriebssystem.

Das Blechband wird mittels einer Transporteinrichtung kontinuierlich in die Transportrichtung bewegt. Bei der Transporteinrichtung kann es sich beispielsweise um eine Walzenrichtmaschine handeln, mit der das von einem Coil abgewickelte Blechband der Laserschneidvorrichtung zugeführt wird. Eine mit der Walzenrichtmaschine erzeugte Transportgeschwindigkeit kann mittels einer Regeleinrichtung geregelt werden. Sie kann der vorgegebenen Sollgeschwindigkeit entsprechen. Anstelle der vorgenannten Walzenrichtmaschine kann das Blechband selbstverständlich auch mittels anderer Transporteinrichtungen, beispielsweise Transportwalzen, einem Transportband oder dgl., in Transportrichtung gefördert werden.

Nach einer besonders vorteilhaften Ausgestaltung der Erfindung werden zum Berechnen des Schneidwegs auf der Grundlage einer Soll-Geschwindigkeit der Transporteinrichtung Ausgangswerte berechnet und nachfolgend werden die Ausgangswerte unter Verwendung der Wegmesswerte korrigiert. Damit kann Rechenzeit eingespart und das erfindungsgemäße Verfahren noch schneller gemacht werden. Falls wegen einer Störung keine Wegmesswerte zur Verfügung stehen, können die Bewegungen des Laserschneidkopfs auch auf der Grundlage der dem Steuerprogramm zur Verfügung stehenden Ausgangswerte durchgeführt werden. In diesem Fall weist die Kontur zwar eine verminderte Genauigkeit auf. Gleichwohl ist eine weitere Herstellung der Blechplatinen und/oder ein geregeltes Herunterfahren der Vorrichtung in diesem Fall möglich.

Nach einer weiteren vorteilhaften Ausgestaltung der Erfindung umfasst die Wegmesseinrichtung zumindest einen Wegaufnehmer. Die Wegmesseinrichtung kann auch mehrere Wegaufnehmer umfassen, wobei mit einem ersten Wegaufnehmer ein erster Weg des Blechbands stromaufwärts und mit einem zweiten Wegaufnehmer ein zweiter Weg des Blechbands stromabwärts der Laserschneideinrichtung gemessen wird. Die Messung des ersten und des zweiten Wegs ermöglicht eine noch genauere und schnellere fortlaufende Berechnung, insbesondere bei einer Laserschneideinrichtung mit mehreren in Transportrichtung hintereinander vorgesehenen Laserschneidköpfen.

Die Wegmesseinrichtung kann mehrere stromaufwärts der Laserschneideinrichtung vorgesehene Wegaufnehmer umfassen, wobei mittels des ersten Wegaufnehmers der erste Weg an einer Oberseite des Blechbands und mittels eines dritten Wegaufnehmers ein dritter Weg an einer Unterseite des Blechbands gemessen wird. D. h. der Weg des Blechbands kann gleichzeitig im Wesentlichen an derselben Stelle sowohl an dessen Oberseite als auch an dessen Unterseite erfasst werden. Durch eine Mittelwertbildung zwischen dem ersten und dem dritten Weg kann besonders exakt der Weg des Blechbands ermittelt werden. Das vorgeschlagene Verfahren ist überdies redundant. Im Falle des Ausfalls des ersten oder dritten Wegaufnehmers können weiterhin Wegmesswerte zur fortlaufenden Berechnung des Schneidwegs des zumindest einen Laserschneidkopfs bereitgestellt werden.

Nach einer weiteren Ausgestaltung der Erfindung umfasst die Wegmesseinrichtung einen vierten Wegaufnehmer, mit dem ein vierter Weg des Blechbands innerhalb der Laserschneideinrichtung zwischen zwei in Transportrichtung aufeinanderfolgend angeordneten Laserschneidköpfen gemessen wird. Mit dem vierten Wegaufnehmer wird ein vierter Weg des Blechbands innerhalb der Laserschneideinrichtung gemessen. Das ermöglicht eine besonders genaue fortlaufende Berechnung von Schneidwegen von z. B. stromabwärts des vierten Wegaufnehmers vorgesehenen Laserschneidköpfen.

Die Wegmesseinrichtung kann zumindest einen optischen und/oder mechanischen Wegaufnehmer umfassen. Bei dem mechanischen Wegaufnehmer handelt es sich zweckmäßigerweise um ein an die Ober- und/oder Unterseite des Blechbands anliegendes Messrad.

Auf der Grundlage der mit der Wegmesseinrichtung ermittelten Wegmesswerte wird erfindungsgemäß fortlaufend eine tatsächliche Geschwindigkeit des Blechbands ermittelt. Die tatsächlichen Geschwindigkeitswerte werden gleichfalls zur Berechnung und/oder Korrektur des Schneidwegs verwendet.

Nach der Erfindung werden die Wegmesswerte zur Regelung einer Geschwindigkeit einer Transporteinrichtung zum Transport des Blechbands in Transportrichtung verwendet. Üblicherweise weist eine Transporteinrichtung eine Regelung auf, mit der eine Transportgeschwindigkeit des Blechbands geregelt wird. Zu diesem Zweck wird eine Umdrehungsgeschwindigkeit von Walzen der Transporteinrichtung gemessen und mit einem Sollwert verglichen. Durch einen Schlupf zwischen dem Blechband und den Transportwalzen kann es allerdings dazu kommen, dass eine tatsächliche Geschwindigkeit des Blechbands geringer ist als die mit der Transporteinrichtung erzeugte Soll-Transportgeschwindigkeit. Indem die Wegmesswerte zur Regelung der Geschwindigkeit der Transporteinrichtung verwendet werden, kann die Transportgeschwindigkeit des Blechbands mit hoher Genauigkeit im Bereich der Soll-Transportgeschwindigkeit gehalten werden.

Nachfolgend werden Ausführungsbeispiele der Erfindung anhand der Zeichnungen näher erläutert. Es zeigen:
- Fig. 1: eine schematische Draufsicht auf eine erste Vorrichtung zur Durchführung des Verfahrens,
- Fig. 2: eine schematische Draufsicht auf eine zweite Vorrichtung zur Durchführung des Verfahrens,
- Fig. 3: eine schematische Draufsicht auf eine dritte Vorrichtung zur Durchführung des Verfahrens und
- Fig. 4: die Geschwindigkeit des Blechbands über der Zeit bei einer ersten Verfahrensvariante und
- Fig. 5: die Geschwindigkeit des Blechbands über der Zeit bei einer zweiten Verfahrensvariante.

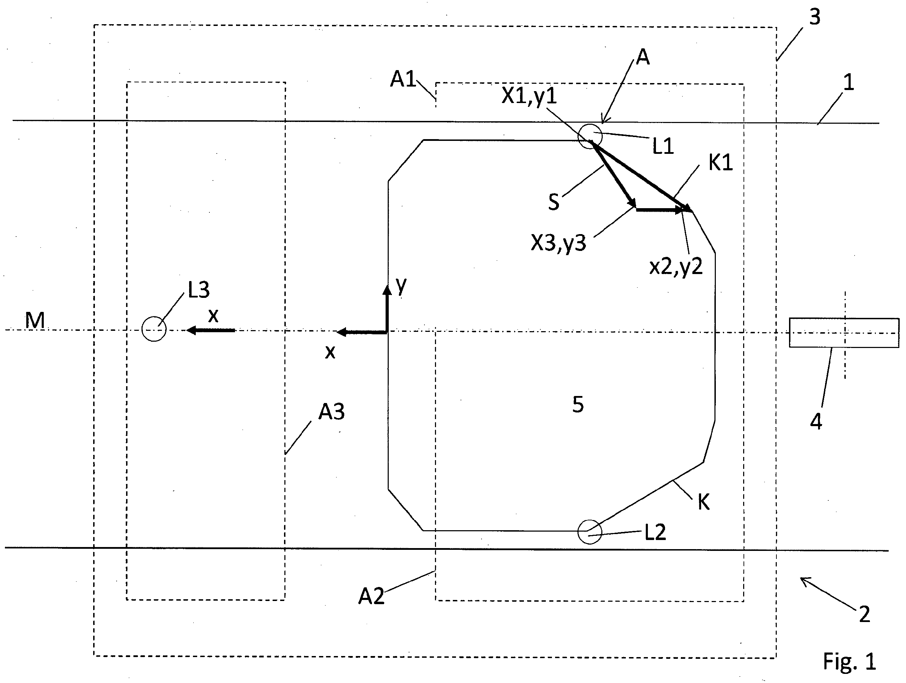

Die Fig. 1 bis 3 zeigen schematisch Vorrichtungen zur Durchführung des erfindungsgemäßen Verfahrens. Ein allgemein mit dem Bezugszeichen 1 bezeichnetes Blechband wird beispielsweise von einem (hier nicht gezeigten) Coil abgewickelt und mittels einer Transporteinrichtung (hier nicht gezeigt) in eine Transport- bzw. x-Richtung transportiert. Das Blechband 1 wird dabei durch eine Laserschneidvorrichtung 2 geführt, welche durch eine für Licht undurchlässige Kabine 3 begrenzt ist. Die Laserschneidvorrichtung 2 umfasst mehrere Laserschneidköpfe L1, L2 und L3. Ein erster L1 und ein zweiter Laserschneidkopf L2 weisen einen ersten A1 und einen zweiten Arbeitsbereich A2 auf. Durch die Laserschneidvorrichtung 2 verläuft eine Mittellinie M. Der erste A1 und der zweite Arbeitsbereich A2 weisen in x-Richtung etwa dieselbe Erstreckung auf. Sie liegen in x-Richtung nebeneinander. Stromabwärts des ersten A1 und des zweiten Arbeitsbereichs A2 befindet sich ein dritter Laserschneidkopf L3, welcher einen dritten Arbeitsbereich A3 aufweist. Der dritte Arbeitsbereich A3 kann in y-Richtung eine Erstreckung aufweisen, welche etwa der Erstreckung des ersten A1 und des zweiten Arbeitsbereichs A2 zusammengenommen entspricht. Die Laserschneidköpfe L1, L2 und L3 sind jeweils auf (hier nicht gezeigten) in x-Richtung verfahrbaren Schlitten angebracht, welche den jeweiligen Arbeitsbereich A1, A2, A3 überspannen. Sie sind auf den jeweiligen Schlitten in y-Richtung bewegbar. Jeder der Laserschneidköpfe L1, L2 und L3 ist mit einer (hier nicht gezeigten) Steuereinrichtung separat gemäß einem vorgegebenen Steuerprogramm bewegbar.

Mit dem Bezugszeichen 4 ist ein erster Wegaufnehmer bezeichnet, welcher stromaufwärts der Laserschneidvorrichtung 2 im Bereich der Mittellinie M angeordnet ist. Es kann sich dabei um einen mechanischen Wegaufnehmer handeln, bei dem ein Messrad reibschlüssig an einer Bandoberseite anliegt. Aus dem Drehwinkel und dem Durchmesser des Messrads kann auf den zurückgelegten Weg des Blechbands 1 geschlossen werden.

Mit dem Bezugszeichen 5 ist eine Blechplatine bezeichnet, welche in einer vorgegebenen Kontur K aus dem Blechband 1 mittels der Laserschneidvorrichtung 2 geschnitten werden soll.

Die Kontur K wird vorteilhafterweise durch Herstellung mehrerer ineinandergreifender Konturteilschnitte erzeugt. Jeder der Konturfeilschnitte wird dabei mit einem der Laserschneidköpfe L1, L2 oder L3 hergestellt. Die zur Erzeugung der Konturteilschnitte erforderlichen Schneidwege S der Laserschneidköpfe L1, L2 und L3 werden mittels des Steuerprogramms berechnet.

In Fig. 1 ist mit dem Bezugszeichen K1 ein Konturabschnitt bezeichnet. Zur Herstellung des Konturabschnitts K1 sind im Steuerprogramm erste Ortskoordinaten x1,y1 sowie zweite Ortskoordinaten x2,y2 des Konturabschnitts K1 hinterlegt. Die mit dem ersten Wegaufnehmer 4 bereitgestellten Wegmesswerte werden an das Steuerprogramm übergeben. Das Steuerprogramm errechnet nunmehr, beispielsweise auf der Grundlage der Vektoraddition, fortlaufend weitere Ortskoordinaten, deren Gesamtheit den Schneidweg S bilden. Bei der Berechnung der weiteren Ortskoordinaten wird jeweils die Bewegung des Blechbands 1 in Transportrichtung x um einen Weg ΔX während des jeweiligen Takts berücksichtigt. Der Schneidweg S endet bei dritten Ortskoordinaten x3, y3. Eine Differenz zwischen den Werten x2 und x3 entspricht dem in Transportrichtung x zurückgelegten Weg des Blechbands 1 während der Herstellung des Schneidwegs S.

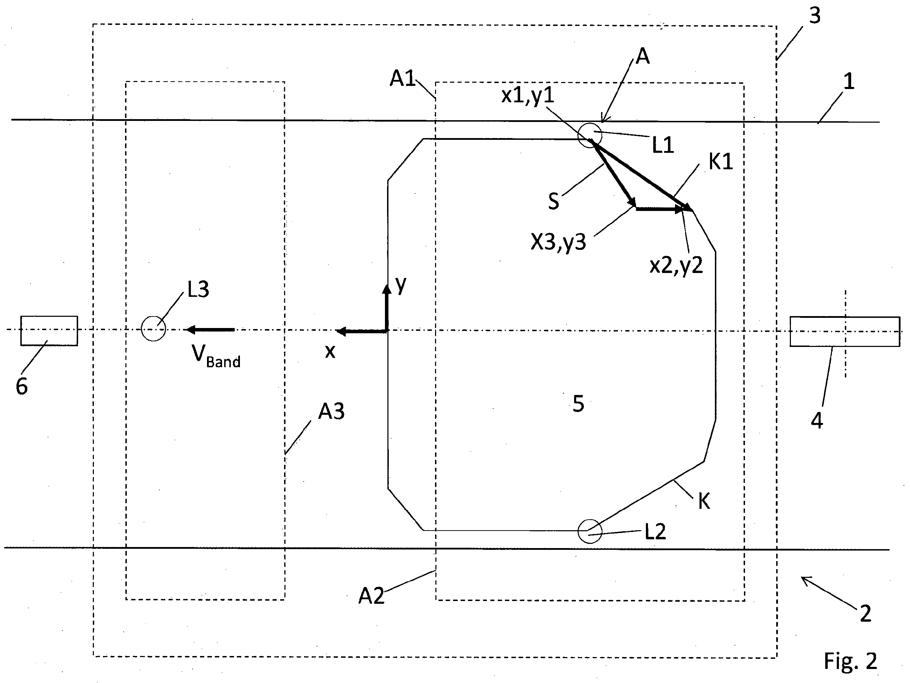

Bei der in Fig. 2 gezeigten zweiten Vorrichtung ist stromabwärts der Laserschneidvorrichtung 2 ein zweiter Wegaufnehmer 6 vorgesehen. Damit kann ein zweiter Weg des Blechbands 1 stromabwärts der Laserschneidvorrichtung 2 gemessen werden. Das ermöglicht beispielsweise eine Mittelwertbildung aus dem ersten und dem zweiten Weg und damit eine noch exaktere Ermittlung des während eines Takts zurückgelegten tatsächlichen Wegs ΔX des Blechbands 1.

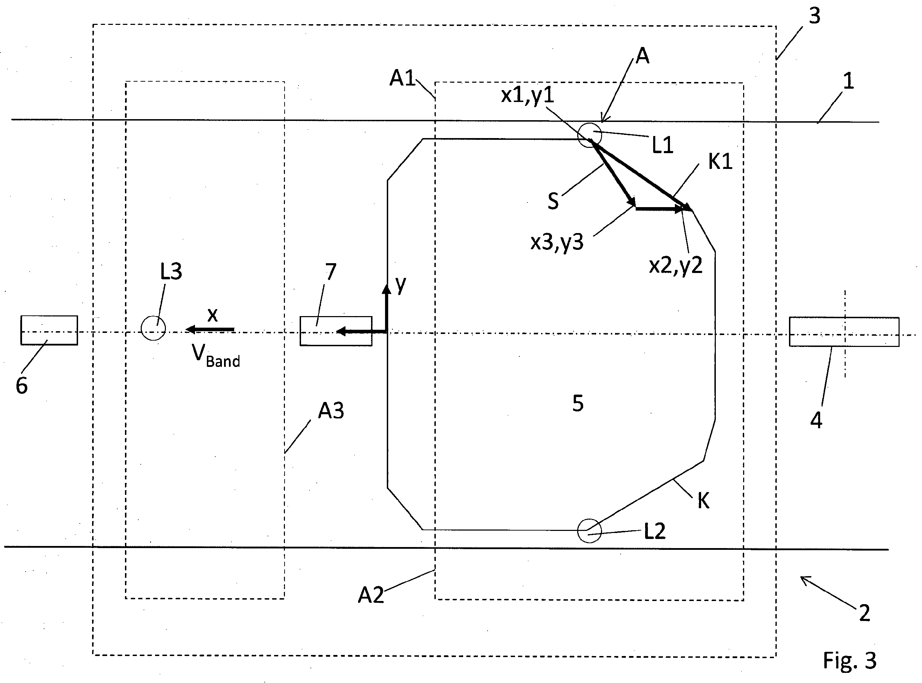

Bei dem in Fig. 3 gezeigten Ausführungsbeispiel ist innerhalb der Laserschneidvorrichtung 2 zwischen den in Transportrichtung x aufeinanderfolgenden Arbeitsbereichen A1, A2 sowie A3 ein weiterer Wegaufnehmer 7 vorgesehen. Der weitere Wegaufnehmer 7 ist unmittelbar vor dem dritten Arbeitsbereich A3 angeordnet. Damit kann eine besonders exakte Messung des Wegs ΔX des Blechbands 1 unmittelbar vor der Herstellung eines mit dem dritten Laserschneidkopf L3 durchgeführten Konturteilschnitts vorgenommen werden.

Wie sich insbesondere aus der obigen Erläuterung ergibt, ist die genaue Kenntnis des pro Takt zurückgelegten Wegs ΔX des Blechbands 1 notwendig für die exakte Herstellung der Kontur K. Bereits bei einer geringen Abweichung zwischen einem sich aus einer Soll-Geschwindigkeit einer Transporteinrichtung, z. B. einer Walzenrichtmaschine, ergebenden "Soll-Wegs" und dem tatsächlich zurückgelegten Weg des Blechbands 1 kommt es dazu, dass die vorgegebene zweite Ortskoordinaten x2,y2 des Konturabschnitts K1 nicht eingehalten werden kann. Infolgedessen wird die gesamte Kontur K der Blechplatine 5 geändert.

Die mit den Wegaufnehmern 4, 6, 7 gemessenen zurückgelegten Wege des Blechbands 1 werden vorzugsweise in Echtzeit von dem Steuerprogramm verarbeitet. D. h. der mit dem Steuerprogramm berechnete Schneidweg S kann während des Schnitts geändert werden.

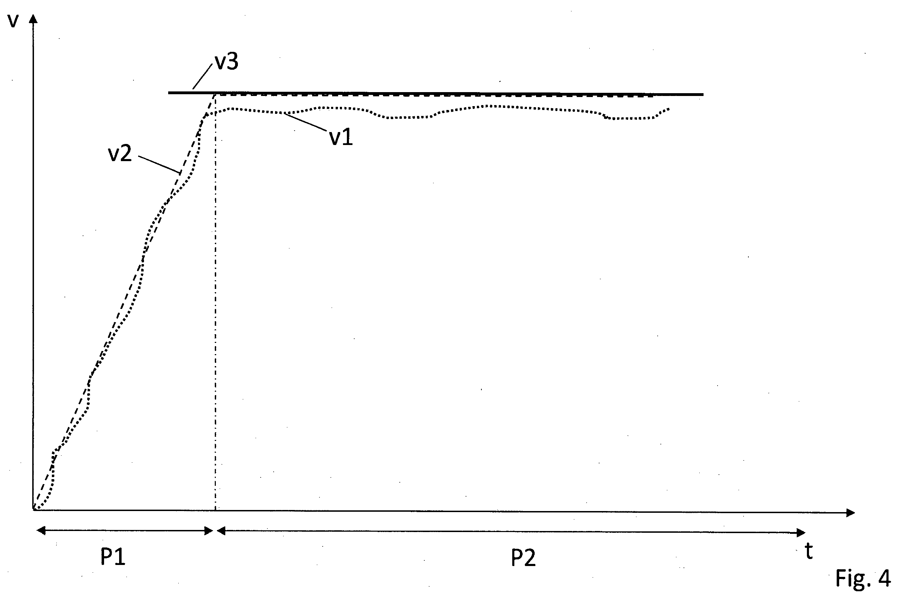

Fig. 4 zeigt die tatsächliche Geschwindigkeit des Blechbands 1 über der Zeit. Die tatsächliche Geschwindigkeit v1 des Blechbands 1 ist durch die punktierte Linie wiedergegeben. Ferner ist in Fig. 4 mit einer unterbrochenen Linie die Geschwindigkeit v2 der Transporteinrichtung gezeigt. Mit einer durchgezogenen Linie ist die gewünschte Soll-Geschwindigkeit v3 des Blechbands 1 dargestellt.

In Fig. 4 ist mit dem Bezugszeichen P1 eine "Startphase" bezeichnet, während der das Blechband 1 beschleunigt wird. Mit dem Bezugszeichen P2 ist eine "Betriebsphase" bezeichnet, während der das Blechband 1 mit der Soll-Geschwindigkeit v3 transportiert werden soll.

Wie aus Fig. 4 ersichtlich ist, schwankt die tatsächliche Geschwindigkeit v1 des Blechbands 1. Sie ist überdies während der Betriebsphase P2 durchgehend geringer als die Soll-Geschwindigkeit v3. Die Differenz zwischen der Soll-Geschwindigkeit v3 und der tatsächlichen Geschwindigkeit v1 während der Betriebsphase P2 ist bedingt durch einen Schlupf des Blechbands 1 in der Transporteinrichtung.

Mittels der erfindungsgemäß vorgeschlagenen Wegmessung kann die Abweichung der tatsächlichen Geschwindigkeit v1 des Blechbands 1 von der Soll-Geschwindigkeit v3 weitgehend kompensiert werden.

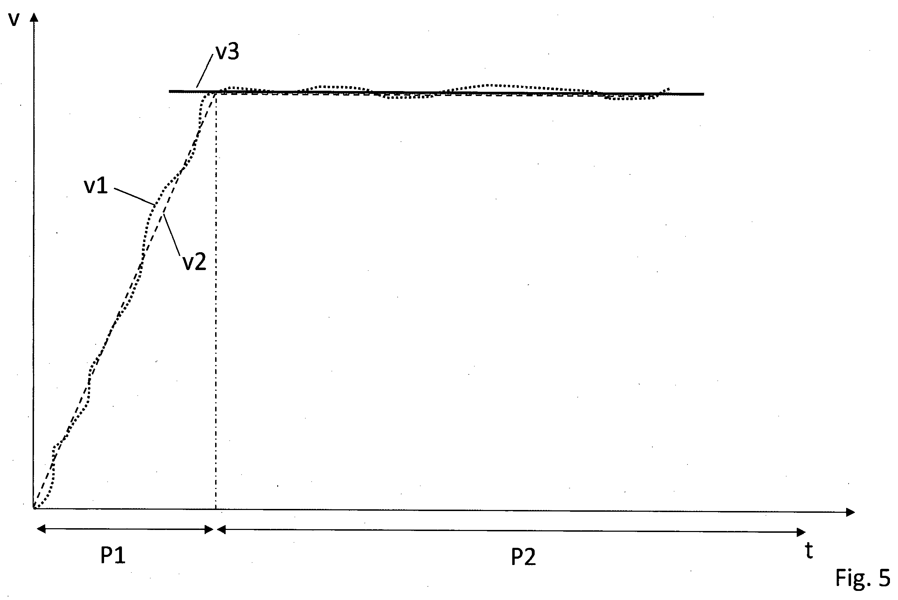

Fig. 5 zeigt ähnlich wie in Fig. 4 die vorgenannten Geschwindigkeiten über der Zeit. Bei der hier gezeigten Verfahrensvariante werden die erfindungsgemäß aufgenommenen Wegmesswerte als Regelgröße in einem Regelkreis zur Regelung der Geschwindigkeit der Transporteinrichtung verwendet. Damit kann ein Schlupf zwischen der Transporteinrichtung und dem Blechband 1 weitgehend kompensiert werden. Die tatsächliche Geschwindigkeit v1 des Blechbands 1 kann damit während der Betriebsphase P2 weitgehend exakt im Bereich der vorgegebenen Soll-Geschwindigkeit v3 gehalten werden. In diesem Fall sind die Abweichungen der tatsächlichen Geschwindigkeit v1 des Blechbands 1 von der Soll-Geschwindigkeit v3 wesentlich geringer. Mit der vorgeschlagenen Verfahrensvariante müssen die jeweiligen Schneidwege S lediglich in einem geringen Ausmaß geändert werden. Infolgedessen ergibt sich eine verbesserte Genauigkeit der Kontur K. Überdies kann das Verfahren auch mit einer höheren Transportgeschwindigkeit des Blechbands 1 durchgeführt werden.

### Bezugszeichenliste

- 1: Blechband
- 2: Laserschneidvorrichtung
- 3: Kabine
- 4: erster Wegaufnehmer
- 5: Blechplatine
- 6: zweiter Wegaufnehmer
- 7: weiterer Wegaufnehmer
- A: Anfangsposition
- A1: erster Arbeitsbereich
- A2: zweiter Arbeitsbereich
- A3: dritter Arbeitsbereich
- B: Schnittposition
- K: Kontur
- K1: Konturabschnitt
- L1: erster Laserschneidkopf
- L2: zweiter Laserschneidkopf
- L3: dritter Laserschneidkopf
- P1: Startphase
- P2: Betriebsphase
- S: Schneidweg
- v1: tatsächliche Geschwindigkeit
- v2: Geschwindigkeit der Transporteinrichtung
- v3: Soll-Geschwindigkeit
- x: Transportrichtung
- x1,y1: erste Ortskoordinate
- x2,y2: zweite Ortskoordinate
- x3,y3: dritte Ortskoordinate
- y: Richtung senkrecht zur Transportrichtung
- ΔX: Weg des Blechbands / Takt

## Patentansprüche

1. Verfahren zum Schneiden einer Blechplatine (5) mit einer vorgegebenen Kontur (K) aus einem kontinuierlich mittels einer Transporteinrichtung in einer Transportrichtung (x) geförderten Blechband (1) mit dem Shrit:
Bereitstellen zumindest einer Laserschneidvorrichtung (2) mit zumindest einem sowohl in die Transportrichtung (x) als auch in eine senkrecht dazu verlaufenden y-Richtung bewegbaren Laserschneidkopf (L1, L2, L3) und einer Steuereinrichtung mit einem Steuerprogramm zur Berechnung eines zur vorgegebenen Kontur (K) korrespondierenden Schneidwegs (S) und zur Steuerung einer Bewegung des Laserschneidkopfs L1, L2, L3) entlang des Schneidwegs (S), und **gekennzeichnet durch** folgende Schritte:
fortlaufendes Messen eines Wegs (ΔX_{Band}) des Blechbands (1) bezüglich der Transportrichtung (x) mittels einer stromaufwärts der Laserschneidvorrichtung (2) vorgesehenen Wegmesseinrichtung, und
Regeln einer Geschwindigkeit (v2) der Transporteinrichtung unter Verwendung der von der Wegmesseinrichtung bereitgestellten Wegmesswerte, um eine tatsächliche Geschwindigkeit (v1) der Blechbands im Bereich einer vorgegebenen Soll-Geschwindigkeit (v3) des Blechbands (1) zu halten,
fortlaufendes Berechnen des Schneidwegs (S) des zumindest einen Laser-schneidkopfs (L1, L2, L3) mittels des Steuerprogramms unter Verwendung der Wegmesswerte, und
Bewegen des Laserschneidkopfs (L1, L2, L3) entlang des Schneidwegs (S), so dass die Blechplatine (5) entsprechend der vorgegebenen Kontur (K) geschnitten wird.

2. Verfahren nach Anspruch 1, wobei das fortlaufende Berechnen des Schneidwegs (S) in Echtzeit durchgeführt wird.

3. Verfahren nach einem der vorhergehenden Ansprüche, wobei zum Berechnen des Schneidwegs (S) auf der Grundlage der Soll-Geschwindigkeit (v3) der Transporteinrichtung Ausgangswerte berechnet und wobei die Ausgangswerte nachfolgend unter Verwendung der Wegmesswerte korrigiert werden.

4. Verfahren nach einem der vorhergehenden Ansprüche, wobei die Wegmesseinrichtung zumindest einen Wegaufnehmer (4, 6, 7) umfasst.

5. Verfahren nach einem der vorhergehenden Ansprüche, wobei die Wegmesseinrichtung mehrere Wegaufnehmer (4, 6, 7) umfasst, wobei mit einem ersten Wegaufnehmer (4) ein erster Weg des Blechbands (1) stromaufwärts und mit einem zweiten Wegaufnehmer (6) ein zweiter Weg des Blechbands (1) stromabwärts der Laserschneideinrichtung (2) gemessen wird.

6. Verfahren nach einem der vorhergehenden Ansprüche, wobei die Wegmesseinrichtung mehrere stromaufwärts der Laserschneideinrichtung (2) vorgesehene Wegaufnehmer (4, 6, 7) umfasst, wobei mittels des ersten Wegaufnehmers (4) der erste Weg an einer Oberseite des Blechbands (1) und mittels eines dritten Wegaufnehmers ein dritter Weg an einer Unterseite des Blechbands (1) gemessen wird.

7. Verfahren nach einem der vorhergehenden Ansprüche, wobei die Wegmesseinrichtung einen vierten Wegaufnehmer (7) umfasst, mit dem ein vierter Weg des Blechbands (1) innerhalb der Laserschneideinrichtung (2) zwischen zwei in Transportrichtung (x) aufeinanderfolgend angeordneten Laserschneidköpfen (L1, L2, L3) gemessen wird.

8. Verfahren nach einem der vorhergehenden Ansprüche, wobei die Wegmesseinrichtung zumindest einen optischen und/oder mechanischen Wegaufnehmer (4, 6, 7) umfasst.

## Claims

1. A method for cutting a sheet metal blank (5) having a predetermined contour (K) from a metal strip (1) that is continuously conveyed in a transport direction (x) by means of a transport device, said method comprising the following step:
providing at least one laser cutting apparatus (2) having at least one laser cutting head (L1, L2, L3) that can be moved both in the transport direction (x) and in a y-direction extending perpendicularly thereto, and a control device having a control program for calculating a cutting path (S) corresponding to the predetermined contour (K) and for controlling a movement of the laser cutting head (L1, L2, L3) along the cutting path (S), and **characterized by** the following steps:
continuously measuring a path (ΔXₛₜᵣᵢₚ) of the metal strip (1) in relation to the transport direction (x) by means of a path measurement device provided upstream of the laser cutting apparatus (2), and
regulating a speed (v2) of the transport device with use of the measured path values provided by the path measuring device in order to hold an actual speed (v1) of the metal strip in the region of a predetermined target speed (v3) of the metal strip (1),
continuously calculating the cutting path (S) of the laser cutting head (L1, L2, L3) by means of the control program with use of the measured path values, and
moving the laser cutting head (L1, L2, L3) along the cutting path (S), such that the sheet metal blank (5) is cut in accordance with the predetermined contour (K).

2. The method according to Claim 1, wherein the continuous calculation of the cutting path (S) is performed in real time.

3. The method according to one of the preceding claims, wherein, in order to calculate the cutting path (S), starting values are calculated on the basis of a target speed (v3) of the transport device, and wherein the starting values are then corrected with use of the measured path values.

4. The method according to one of the preceding claims, wherein the path measurement device comprises at least one path recorder (4, 6, 7).

5. The method according to one of the preceding claims, wherein the path measurement device comprises a plurality of path recorders (4, 6, 7), wherein a first path of the metal strip (1) upstream of the laser cutting device (2) is measured with a first path recorder (4), and a second path of the metal strip (1) downstream of the laser cutting device (2) is measured with a second path recorder (6).

6. The method according to one of the preceding claims, wherein the path measurement device comprises a plurality of path recorders (4, 6, 7) provided upstream of the laser cutting device (2), wherein the first path is measured on an upper side of the metal strip (1) by means of the first path recorder (4), and a third path is measured on a lower side of the metal strip (1) by means of a third path recorder.

7. The method according to one of the preceding claims, wherein the path measurement device comprises a fourth path recorder (7), with which a fourth path of the metal strip (1) within the laser cutting device (2) is measured between two laser cutting heads (L1, L2, L3) arranged successively in the transport direction (x).

8. The method according to one of the preceding claims, wherein the path measurement device comprises at least one optical and/or mechanical path recorder (4, 6, 7).

## Revendications

1. Procédé de découpe d'un larget (5) d'un contour prédéfini (K) dans un feuillard (1) défilant en continu dans une direction de transport (x) au moyen d'un dispositif de transport comprenant l'étape:
mise à disposition d'au moins un dispositif de découpe laser (2) équipé d'au moins une tête de découpe laser (L1, L2, L3) mobile tant dans la direction de transport (x) que dans une direction y perpendiculaire à cette dernière et d'un dispositif de commande doté d'un programme de commande pour le calcul d'un trajet de coupe (S) correspondant au contour prédéfini (K) et assurant la commande d'un déplacement de la tête de découpe laser (L1, L2, L3) le long d'un trajet de coupe (S), et **caractérisé par** les étapes suivantes:
mesure en continu d'une course (ΔX_{Band}) du feuillard (1) par rapport à la direction de transport (x) au moyen d'un dispositif de mesure de déplacement prévu en amont du dispositif de découpe laser (2), et
réglage d'une vitesse (v2) du dispositif de transport en utilisant les valeurs mesurées de de déplacement mises à disposition par le dispositif de mesure de déplacement pour maintenir une vitesse réelle (v1) du feuillard dans la zone d'une vitesse de consigne prédéfinie (v3) du feuillard (1),
calcul en continu du trajet de coupe (S) d'au moins une tête de découpe laser (L1, L2, L3) au moyen d'un programme de commande en utilisant les valeurs mesurées de déplacement, et
déplacement de la tête de découpe laser (L1, L2, L3) le long du trajet de coupe (S), de façon à ce que le larget (5) soit découpé suivant le contour (K) prédéfini.

2. Procédé selon la revendication 1, en ce que le calcul en continu du trajet de coupe (S) s'effectue en temps réel.

3. Procédé selon l'une des revendications précédentes, en ce que des valeurs initiales sont calculées pour le calcul du trajet de coupe (S) sur la base de la vitesse de consigne (v3) du dispositif de transport et en ce que les valeurs initiales sont corrigées ultérieurement en utilisant les valeurs mesurées de déplacement.

4. Procédé selon l'une des revendications précédentes, en ce que le dispositif de mesure de déplacement comporte au moins un capteur de déplacement (4, 6, 7).

5. Procédé selon l'une des revendications précédentes, en ce que le dispositif de mesure de déplacement comporte plusieurs capteurs de déplacement (4, 6, 7), en ce qu'une première course du feuillard (1) est mesurée en amont avec un premier capteur de déplacement (4) et une deuxième course du feuillard (1) est mesurée en aval du dispositif de découpe laser (2) avec un deuxième capteur de déplacement (6).

6. Procédé selon l'une des revendications précédentes, en ce que le dispositif de mesure de déplacement comporte plusieurs capteurs de déplacement (4, 6, 7) prévus en amont du dispositif de découpe laser (2), en ce que la première course sur une face supérieure du feuillard (1) est mesurée au moyen du premier capteur de déplacement (4) et une troisième course sur une face inférieure du feuillard (1) est mesurée au moyen d'un troisième capteur de déplacement.

7. Procédé selon l'une des revendications précédentes, en ce que le dispositif de mesure de déplacement comporte un quatrième capteur de déplacement (7) avec lequel une quatrième course du feuillard (1) est mesurée dans le dispositif de découpe laser (2) entre deux têtes de découpe laser (L1, L2, L3) disposées successivement dans la direction de transport (x).

8. Procédé selon l'une des revendications précédentes, en ce que le dispositif de mesure de déplacement comporte au moins un capteur de déplacement (4, 6, 7) optique et/ou mécanique.
